# EUROPEAN PATENT APPLICATION

(11) **EP 4 647 833 A1**
(43) Date of publication of application: **12.11.2025**
(21) Application number: 24785029.0
(22) Date of filing: 08.02.2024
(51) Int. Cl.: G02F 1/1333, G02F 1/13357

(54) **DISPLAY APPARATUS**

(30) Priority: 03.04.2023 KR 20230043793
(71) Applicant: Samsung Electronics Co., Ltd., Suwon-si, Gyeonggi-do 16677 (KR)
(72) Inventor: JEONG, Kyo, Suwon-si Gyeonggi-do 16677 (KR); KANG, Daejong, Suwon-si Gyeonggi-do 16677 (KR); WOO, Sungje, Suwon-si Gyeonggi-do 16677 (KR); CHAE, Hyunjoong, Suwon-si Gyeonggi-do 16677 (KR)
(74) Representative: Gulde & Partner
(86) International application number: PCT/KR2024/001900
(87) International publication number: WO 2024/210318

(57) **Abstract**

A display apparatus includes a rear chassis, a light source module installed on the rear chassis and emitting light, a middle frame fastened to a front side of the rear chassis, a diffuser plate fixed to the middle frame and disposed on a front side of the light source module to diffuse light emitted from the light source module, a panel disposed on a front side of the diffuser plate, and a front chassis provided to cover an edge of the panel. The front chassis includes a plurality of frame assembly portions formed on one surface of the front chassis to be detachably assembled to the middle frame, and the plurality of frame assembly portions is assembled in a direction perpendicular to the middle frame.

## Description

### [Technical Field]

The disclosure relates to a display apparatus with an improved assembly structure of a front chassis and a middle frame.

### [Background Art]

Generally, a display apparatus is a device that displays a screen, such as a monitor or television. A display apparatus is a type of output device that converts acquired or stored electrical information into visual information and displays the visual information to a user, and is used in various fields such as homes and workplaces.

Display apparatuses include monitor devices connected to personal computers or server computers, portable computer devices, navigation terminal devices, general television devices, Internet Protocol television (IPTV) devices, portable terminal devices such as smart phones, tablet PCs, personal digital assistants (PDAs), or cellular phones, various display apparatuses used to reproduce images such as advertisements or movies in industrial sites, or various other types of audio/video systems.

A display apparatus may include a panel that displays a screen and a front chassis provided at edges of the panel to cover the edges of the panel.

### [Disclosure]

### [Technical Problem]

An embodiment of the present disclosure provides a display apparatus with an improved structure in which a front chassis covering the edges of a panel is assembled to a middle frame.

An embodiment of the present disclosure provides a display apparatus improved so that a front chassis covering the lower portion among the edges of a panel is hook-assembled to a middle frame.

An embodiment of the present disclosure provides a display apparatus capable of reducing assembly costs by hook-assembling a front chassis covering the lower portion among the edges of a panel to a middle frame without using screws.

An embodiment of the present disclosure provides a display apparatus capable of shortening assembly time by hook-assembling a front chassis covering the lower portion among the edges of a panel to a middle frame without using screws.

An embodiment of the present disclosure provides a display apparatus capable of improving aesthetics by hook-assembling a front chassis covering the lower portion among the edges of a panel to a middle frame without using screws so that screws are not exposed to the exterior.

The technical objectives to be achieved in this document are not limited to the technical objectives mentioned above, and other technical objectives not mentioned will be clearly understood by those skilled in the art to which the present invention belongs from the following description.

### [Technical Solution]

A display apparatus according to the concept of the present disclosure includes a rear chassis, a light source module installed on the rear chassis and emitting light, a middle frame fastened to a front side of the rear chassis, a diffuser plate fixed to the middle frame and disposed on a front side of the light source module to diffuse light emitted from the light source module, a panel disposed on a front side of the diffuser plate, and a front chassis provided to cover an edge of the panel. The front chassis includes a plurality of frame assembly portions formed on one surface of the front chassis to be detachably assembled to the middle frame, and the plurality of frame assembly portions is assembled in a direction perpendicular to the middle frame.

A display apparatus according to the concept of the present disclosure includes a rear chassis, a light source module installed on the rear chassis and emitting light, a middle frame fastened to a front side of the rear chassis, a diffuser plate fixed to the middle frame and disposed on a front side of the light source module to diffuse light emitted from the light source module, a panel disposed on a front side of the diffuser plate, and a front chassis provided to cover an edge of the panel and including a plurality of frame assembly portions detachably assembled to the middle frame. Each of the plurality of frame assembly portions includes a pair of hooks detachably assembled to the middle frame and a pair of guide protrusions that guides assembly positions of the pair of hooks.

### [Description of Drawings]

FIG. 1 is a view showing an exterior of a display apparatus according to an embodiment.
FIG. 2 is an exploded view showing main components of the display apparatus according to an embodiment.
FIG. 3 is a view showing a front chassis covering a lower portion among edges of a panel separated from a middle frame according to an embodiment.
FIG. 4 is a view showing a front chassis covering a lower portion among edges of a panel assembled to a middle frame according to an embodiment.
FIG. 5 is a view showing frame assembly portions formed on a front chassis being assembled to chassis assembly portions formed on a middle frame according to an embodiment.
FIG. 6 is a cross-sectional view schematically showing a first hook of a front chassis assembled to a first assembly protrusion of a middle frame according to an embodiment.
FIG. 7 is a cross-sectional view schematically showing a second hook of a front chassis assembled to a second assembly protrusion of a middle frame according to an embodiment.

### [Modes of the Invention]

The embodiments described in this specification and the configurations shown in the drawings are merely preferred examples of the present disclosure, and there may be various modifications that may replace the embodiments and drawings of this specification at the time of filing this application.

Also, the same reference numbers or symbols presented in each drawing of this specification indicate parts or components that perform substantially the same functions.

Also, the terms used in this specification are used to describe embodiments and are not intended to limit and/or restrict the present disclosure. The singular forms "a," "an," and "the" are intended to include the plural forms as well, unless the context clearly indicates otherwise. In this specification, terms such as "include" or "have" are intended to specify that features, numbers, steps, operations, elements, parts, or combinations thereof described in the specification exist, but do not preclude the presence or addition of one or more other features, numbers, steps, operations, elements, parts, or combinations thereof.

Also, terms including ordinal numbers such as "first," "second," etc. used in this specification may be used to describe various components, but the components are not limited by these terms, and these terms are used only to distinguish one component from another component. For example, without departing from the scope of the present invention, a first component may be termed a second component, and similarly, a second component may be termed a first component. The term "and/or" includes combinations of a plurality of related listed items or any item among a plurality of related listed items.

Meanwhile, terms such as "front end," "rear end," "upper portion," "lower portion," "front," "rear," "top," and "bottom" used in the following description are defined based on the drawings, and the shape and position of each component are not limited by these terms.

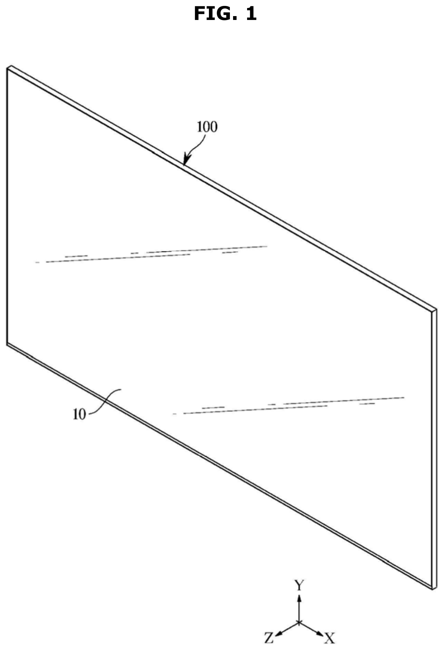

Regarding the directions of front, rear, upper, lower, left, and right, they will be referred to uniformly throughout the specification based on the directions shown in FIG. 1 of the accompanying drawings. FIG. 1 shows X-axis, Y-axis, and Z-axis directions that are perpendicular to each other, where the X-axis direction means the left-right direction, the Y-axis direction means the up-down direction, and the Z-axis direction means the front-rear direction.

Hereinafter, embodiments according to the present disclosure will be described in detail with reference to the accompanying drawings.

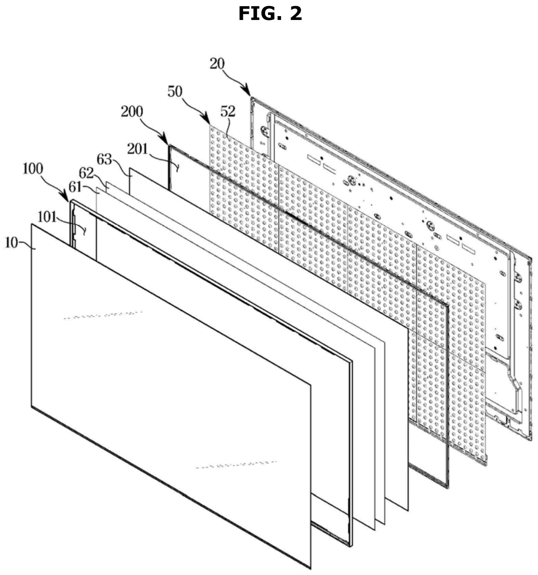

FIG. 1 is a view showing an exterior of a display apparatus according to an embodiment. FIG. 2 is an exploded view showing main components of a display apparatus according to an embodiment.

As shown in FIGS. 1 to 2, the display apparatus may include a panel 10 that displays an image, a backlight unit disposed at a rear of the panel 10 to provide light to the panel 10, a rear chassis 20 disposed at a rear of the backlight unit to support the backlight unit, a front chassis 100 provided to cover edges of the panel 10, and a middle frame 200 coupled between the front chassis 100 and the rear chassis 20.

The panel 10 may include a thin film transistor substrate having thin film transistors formed in a matrix form, a color filter substrate coupled parallel to the thin film transistor substrate, and liquid crystal injected between the thin film transistor substrate and the color filter substrate whose optical properties vary according to changes in voltage or temperature.

The backlight unit may be disposed at the rear of the panel 10 to illuminate light toward the panel 10. The backlight unit may include a light source module 50 including a light source 51 and a substrate 52 on which the light source 51 is mounted. The backlight unit may include optical members disposed on a light path of light emitted from the light source 51.

The light source module 50 may be installed on the rear chassis 20. The light source module 50 may be installed on a front surface of the rear chassis 20. The light source module 50 may include a plurality of substrates 52 provided in a plate form. However, this is not limiting, and the substrate may be provided in a bar form.

A plurality of light source modules 50 may be provided with different sizes and/or numbers according to the size of the display apparatus. In the drawings, a plurality of light source modules 50 are shown as being provided in eight units, but this is not limiting.

Drive power lines for supplying drive power to the light source 51 may be formed on the substrate 52, and may be connected to signal cables (not shown) and backlight drive circuits (not shown).

A plurality of light sources 51 may be mounted on each of the plurality of substrates 52 to be spaced apart from each other. The light source 51 may include a Light Emitting Diode (LED). Alternatively, the light source 51 may include a Cold Cathode Fluorescent Lamp (CCFL) or an External Electrode Fluorescent Lamp (EEFL).

A plurality of lenses 53 may be mounted on the substrate 52 to cover each of the plurality of light sources 51. The lens 53 may be provided to cover the light source 51 and diffuse light emitted from the light source 51.

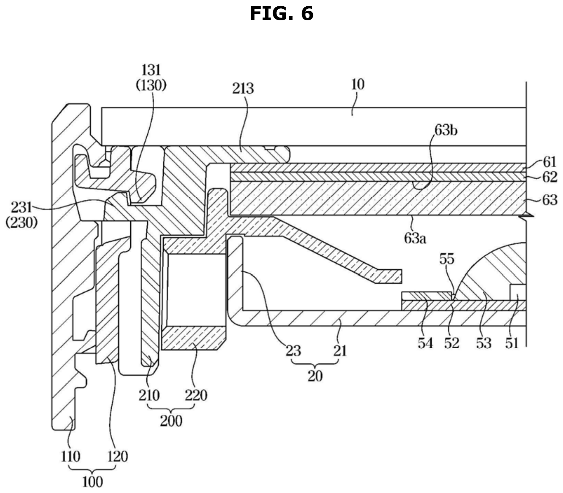

Also, a reflective sheet 54 may be provided on each of the plurality of substrates 52. The reflective sheet 54 may be provided with a size corresponding to the substrate 52. The reflective sheet 54 may be adhered to a mounting surface of the substrate 52 on which the light source 51 is mounted. In other words, the reflective sheet 54 may be disposed on an upper surface of the substrate 52. Through holes 55 may be formed in the reflective sheet 54 to allow the light source 51 and lens 53 to pass therethrough (See FIG. 6).

The reflective sheet 54 may reflect light to prevent light loss. Specifically, the reflective sheet 54 may reflect light emitted from the light source 51 or light reflected rearward from the diffuser plate 63 toward a rear surface 63a of the diffuser plate 63. The reflective sheet 54 may prevent light loss from the light source 51 by preventing light emitted from the light source 51 from being emitted toward the rear of the display apparatus (See FIG. 6).

The backlight unit may include optical members 61, 62, and 63 disposed on a light path of light emitted from the light source 51.

The optical members 61, 62, and 63 may include a diffuser plate 63 that evenly diffuses irregular light emitted from the light source 51, and a first optical sheet 61 and a second optical sheet 62 that improve light characteristics.

The diffuser plate 63 may evenly diffuse irregular light generated from the plurality of light sources 51. The diffuser plate 63 may evenly diffuse light incident on its rear surface 63a and emit it through its front surface 63b (See FIG. 6).

The first optical sheet 61 and the second optical sheet 62 may be disposed in front of the diffuser plate 63 to improve optical characteristics of light emitted from the diffuser plate 63. Although the first optical sheet 61 and the second optical sheet 62 are shown in the drawings, the number of optical sheets may be more or less than two.

The first optical sheet 61 and the second optical sheet 62 may include a diffuser sheet that cancels patterns of the diffuser plate 63, a prism sheet that improves brightness by concentrating light, a protection sheet that protects other optical sheets from external impact or foreign matter intrusion, a reflective polarizing sheet (DBEF, Dual Brightness Enhancement Film) that improves brightness by transmitting one polarization and reflecting another polarization, a complex sheet that evenly diffuses light, a quantum dot sheet that improves color reproducibility by changing wavelengths of light, etc. Quantum dots, which are semiconductor crystals of several nanometers in size that emit light, may be dispersedly arranged inside the quantum dot sheet. Quantum dots may generate all colors of visible light according to their size when receiving blue light. The smaller the size of quantum dots, the shorter wavelength light they generate, and the larger the size, the longer wavelength light they generate.

The first optical sheet 61, the second optical sheet 62, and the diffuser plate 63 may be provided integrally. Adhesive may be provided between the first optical sheet 61 and the second optical sheet 62, and between the second optical sheet 62 and the diffuser plate 63, so that the first optical sheet 61, the second optical sheet 62, and the diffuser plate 63 may be provided integrally like a single sheet.

The rear chassis 20 may be disposed at the rear of the backlight unit. The backlight unit may be accommodated between the rear chassis 30, the liquid crystal panel 10, and the front chassis 100.

The rear chassis 20 may include a base 21 on which the light source module 50 is installed, and first ribs 23 formed at upper, lower, left, and right edges of the rear chassis 20 to be assembled with the middle frame 200 (See FIG. 6).

The base 21 may contact the substrate 52 to dissipate heat generated from heat-generating elements such as the plurality of light sources 51 mounted on the substrate 52 to the outside. For this purpose, the rear chassis 20 including the base 21 is preferably formed of various metal materials such as aluminum and SUS with high heat transfer efficiency, but is not limited thereto. The rear chassis 20 may be formed of plastic materials such as ABS (See FIG. 6).

The first ribs 23 may be inserted into grooves formed in the middle frame 200 so that the middle frame 200 may be assembled to the rear chassis 20, and this will be described in detail below (See FIG. 6).

The front chassis 100 may have a frame shape with an opening 101 so that light from the backlight unit is provided to the panel 10. The front chassis 100 may be provided to cover edges of the panel 10 and the middle frame 200.

The front chassis 100 may be provided to cover edges of the panel 10 and may be provided not to cover a front surface of the panel 10. Since the front chassis 100 is provided not to cover a screen display area of the panel 10, the size of the screen display area of the panel 10 may not be reduced due to the front chassis 100. Therefore, the size of the screen display area of the panel 10 of the display apparatus may be increased. A detailed description of the front chassis 100 will be provided below.

The middle frame 200, like the front chassis 100, may have a frame shape with an opening 201 so that light from the backlight unit is provided to the panel 10. The middle frame 200 may be provided to be assembled with the rear chassis 20 and the front chassis 100. The middle frame 200 may be provided to fix the diffuser plate 63 and the first and second optical sheets 61, 62. Also, the middle frame 200 may be provided to fix the panel 10. The middle frame 200 may be provided to fix the diffuser plate 63 (See FIG. 6).

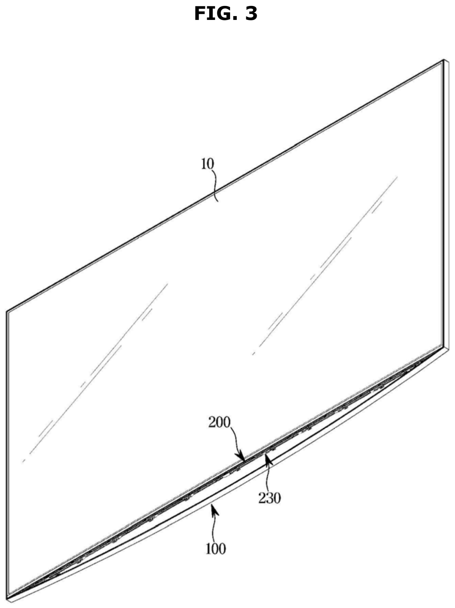

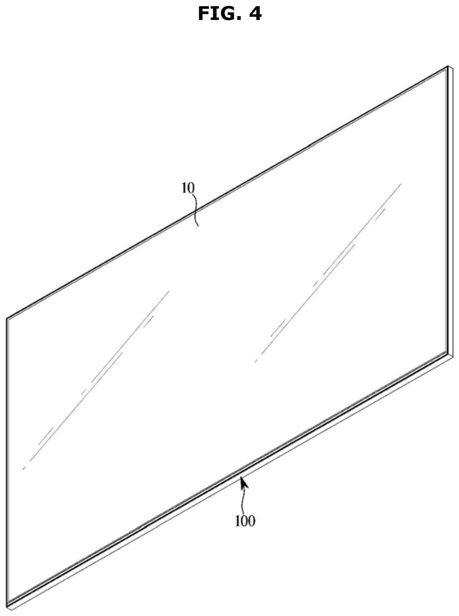

FIG. 3 is a view showing a front chassis covering a lower portion among edges of a panel separated from a middle frame according to an embodiment. FIG. 4 is a view showing a front chassis covering a lower portion among edges of a panel assembled to a middle frame according to an embodiment.

As shown in FIGS. 3 to 4, the front chassis 100 covering the lower portion among edges of the panel 10 may be detachably assembled to the middle frame 200.

A drive printed circuit board (not shown) capable of transmitting drive signals to the panel 10 may be mounted on a rear surface of the rear chassis 20. However, the position of the drive printed circuit board is not limited to the rear surface of the rear chassis 20. That is, the drive printed circuit board may be mounted on a front surface of the rear chassis 20. The drive printed circuit board may also be mounted on a rear surface of the panel 10.

The drive printed circuit board mounted on the rear surface of the rear chassis 20 may be connected to the panel 10 by a chip on film (COF, not shown). The chip on film may be integrally formed of a bendable film cable made of flexible material and a driver IC. The driver IC may receive drive signals and video and audio data through the film cable, and may transmit drive signals and video and audio data to the panel 10 through the film cable. The chip on film may have one side connected to a lower end of the panel 10 and the other side connected to the drive printed circuit board.

The middle frame 200 may be provided at the lower end of the panel 10. The middle frame 200 may be formed by injection molded. The middle frame 200 may be provided at the lower end of the panel 10 and exposed to the outside. The other side of the chip on film may be guided by the middle frame 200 to be bent toward the rear surface of the rear chassis 20 and then connected to the drive printed circuit board. For this purpose, the front chassis 100 covering the lower portion among edges of the panel 10 may be detachably assembled to the middle frame 200. That is, after separating the front chassis 100 covering the lower portion among edges of the panel 10 from the middle frame 200, the other side of the chip on film may be bent and connected to the drive printed circuit board. When the other side of the chip on film is connected to the drive printed circuit board, the front chassis 100 may be assembled to the middle frame 200.

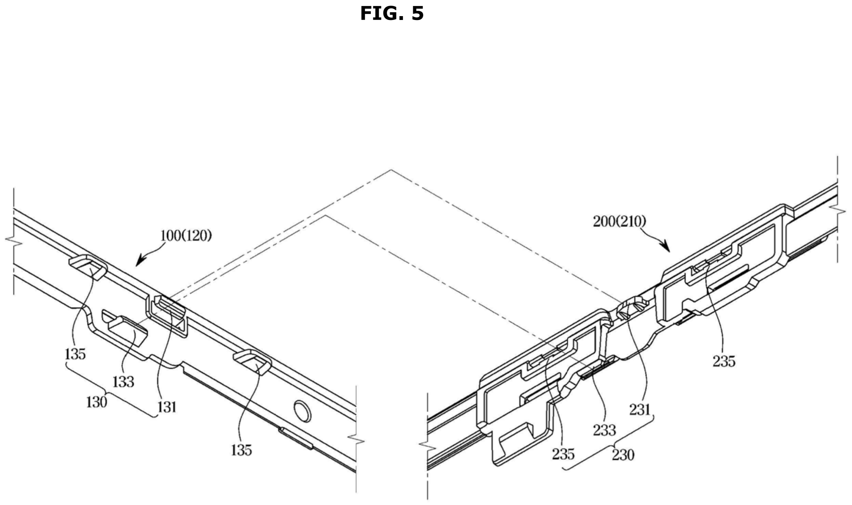

To detachably assemble the front chassis 100 covering the lower portion among edges of the panel 10 to the middle frame 200, the front chassis 100 may include a plurality of frame assembly portions 130 formed on one surface of the front chassis 100. The one surface of the front chassis 100 on which the plurality of frame assembly portions 130 are formed may be a surface facing the lower portion of the panel 10 (See FIG. 5).

To detachably assemble the front chassis 100 covering the lower portion among edges of the panel 10 to the middle frame 200, the middle frame 200 may include a plurality of chassis assembly portions 230 formed so that the plurality of frame assembly portions 130 formed on the front chassis 100 are detachably assembled (See FIG. 5).

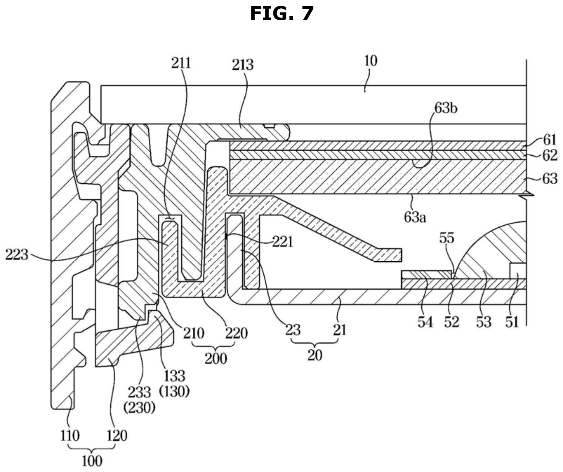

FIG. 5 is a view showing frame assembly portions formed on a front chassis being assembled to chassis assembly portions formed on a middle frame according to an embodiment. FIG. 6 is a cross-sectional view schematically showing a first hook of a front chassis assembled to a first assembly protrusion of a middle frame according to an embodiment. FIG. 7 is a cross-sectional view schematically showing a second hook of a front chassis assembled to a second assembly protrusion of a middle frame according to an embodiment.

As shown in FIGS. 5 to 7, the front chassis 100 may be provided to cover edges of the panel 10. The front chassis 100 may include a first chassis 110 that forms an exterior. The front chassis 100 may include a second chassis 120 assembled to one surface of the first chassis 110. The second chassis 120 may be formed by injection molded. The one surface of the first chassis 110 to which the second chassis 120 is assembled may be a surface of the first chassis 110 facing the panel 10. A plurality of frame assembly portions 130 assembled to the middle frame 200 may be formed on the injection-molded second chassis 120.

Each of the plurality of frame assembly portions 130 may include a pair of hooks 131, 133 detachably assembled to the middle frame 200. Each of the plurality of frame assembly portions 130 may include a pair of guide protrusions 135 that guide assembly positions of the pair of hooks 131 and 133.

The pair of hooks 131 and 133 may be formed to protrude from one surface of the front chassis 100 in a direction in which the front chassis 100 is assembled to the middle frame 200. That is, the pair of hooks 131 and 133 may be formed to protrude from one surface of the front chassis 100 in a direction perpendicular to the one surface of the front chassis 100. Therefore, the pair of hooks 131 and 133 may be assembled to the middle frame 200 in a direction perpendicular to the middle frame 200. That is, the plurality of frame assembly portions 130 formed on the front chassis 100 may be assembled to the middle frame 200 in a direction perpendicular to the middle frame 200.

The pair of hooks 131 and 133 may include a first hook 131 formed at one end of the front chassis 100 and a second hook 133 formed at the other end of the front chassis 100. The first hook 131 and the second hook 133 may be formed at different positions in a longitudinal direction of the front chassis 100.

The pair of guide protrusions 135 may be formed on left and right sides of the pair of hooks 131 and 133, respectively. The pair of guide protrusions 135 may be inserted into a pair of guide grooves 235 formed in the middle frame 200 described below when the pair of hooks 131 and 133 are assembled to the middle frame 200. When the pair of guide protrusions 135 are inserted into the pair of guide grooves 235, the pair of hooks 131 and 133 may be assembled to a first assembly protrusion 231 and a second assembly protrusion 233 of the middle frame 200 described below at correct positions.

The middle frame 200 may include a first middle frame 210 to which the front chassis 100 is assembled. The middle frame 200 may include a second middle frame 220 assembled to the first middle frame 210.

The second middle frame 220 may be assembled to the rear chassis 20. To assemble the second middle frame 220 to the rear chassis 20, the rear chassis 20 may include first ribs 23 formed at upper, lower, left, and right edges of the rear chassis 20. The second middle frame 220 may include first assembly grooves 221 assembled to the first ribs 23. That is, the second middle frame 220 may be assembled to the rear chassis 20 by inserting the first ribs 23 into the first assembly grooves 221.

The second middle frame 220 may include second ribs 223 to which the first middle frame 210 is assembled. The first middle frame 210 may include second assembly grooves 211 to which the second ribs 223 of the second middle frame 220 are assembled. That is, the first middle frame 210 may be assembled to the second middle frame 220 by inserting the second ribs 223 into the second assembly grooves 211.

The diffuser plate 63 may be fixed to the second middle frame 220. The diffuser plate 63 may be fixed to the second middle frame 220 by adhesive or the like.

The first middle frame 210 may include second assembly grooves 211 to which the second ribs 223 of the second middle frame 220 are assembled. The first middle frame 210 may include support ribs 213 that support a front surface 63b of the diffuser plate 63 fixed to the second middle frame 210. The support ribs 213 may support the front surface 63b of the diffuser plate 63 to prevent the diffuser plate 63 from moving forward. More specifically, the support ribs 213 may support front surfaces of optical members 61, 62, and 63 including the diffuser plate 63 to prevent the optical members 61, 62, and 63 from moving forward.

A plurality of chassis assembly portions 230 to which the front chassis 100 is detachably assembled may be formed on the first middle frame 210. The plurality of chassis assembly portions 230 may be formed to correspond to the plurality of frame assembly portions 130 formed on the front chassis 100.

Each of the plurality of chassis assembly portions 230 may include a first assembly protrusion 231 to which the first hook 131 formed on the front chassis 100 is assembled, and a second assembly protrusion 233 to which the second hook 133 formed on the front chassis 100 is assembled. The first assembly protrusion 231 and the second assembly protrusion 233 may be formed at positions corresponding to the first hook 131 and the second hook 133, respectively.

Each of the plurality of chassis assembly portions 230 may include a pair of guide grooves 235 into which the pair of guide protrusions 135 formed on the front chassis 100 are inserted. The pair of guide grooves 235 may be formed on left and right sides of the first assembly protrusion 231 and the second assembly protrusion 233, respectively, to correspond to the pair of guide protrusions 135.

A display apparatus according to an embodiment of the present disclosure includes a rear chassis 20, a light source module 50 installed on the rear chassis and emitting light, a middle frame 200 fastened to a front side of the rear chassis, a diffuser plate 63 fixed to the middle frame and disposed on a front side of the light source module to diffuse light emitted from the light source module, a panel 10 disposed on a front side of the diffuser plate, and a front chassis 100 provided to cover edges of the panel. The front chassis includes a plurality of frame assembly portions 130 formed on one surface of the front chassis to be detachably assembled to the middle frame, and the plurality of frame assembly portions are assembled in a direction perpendicular to the middle frame. According to the present disclosure, the structure in which the front chassis 100 covering the edges of the panel 10 is assembled to the middle frame 200 may be improved. The front chassis 100 covering a lower portion among the edges of the panel 10 may be improved to be hook-assembled to the middle frame 200. The front chassis 100 covering the lower portion among the edges of the panel 10 may be hook-assembled to the middle frame 200 without using screws, thereby reducing assembly costs. The front chassis 100 covering the lower portion among the edges of the panel 10 may be hook-assembled to the middle frame 200 without using screws, thereby shortening assembly time. The front chassis 100 covering the lower portion among the edges of the panel 10 may be hook-assembled to the middle frame 200 without using screws, so that screws are not exposed to the exterior, thereby improving aesthetics. The plurality of frame assembly portions 130 may be assembled in the vertical direction of the middle frame 200, thereby facilitating assembly.

Each of the plurality of frame assembly portions 130 may include a pair of hooks 131 and 133 detachably assembled to the middle frame 200 and a pair of guide protrusions 135 that guide assembly positions of the pair of hooks 131 and 133. According to the present disclosure, the pair of hooks 131 and 133 may be assembled to the middle frame 200 at correct positions.

The pair of hooks may be formed to protrude from one surface of the front chassis in a direction in which the front chassis is assembled to the middle frame. According to the present disclosure, the pair of hooks 131 and 133 may be assembled in the vertical direction of the middle frame 200, thereby facilitating assembly.

The pair of guide protrusions 135 may be formed on left and right sides of the pair of hooks 131 and 133, respectively.

The pair of hooks 131 and 133 may include a first hook 131 formed at one end of the front chassis 100 and a second hook 133 formed at the other end of the front chassis 100 and positioned differently from the first hook 131 in a longitudinal direction of the front chassis 100.

The middle frame 200 may include a plurality of chassis assembly portions 230 to which the plurality of frame assembly portions 130 are assembled. According to the present disclosure, the structure in which the front chassis 100 covering the edges of the panel 10 is assembled to the middle frame 200 may be improved. The front chassis 100 covering the lower portion among the edges of the panel 10 may be improved to be hook-assembled to the middle frame 200. The front chassis 100 covering the lower portion among the edges of the panel 10 may be hook-assembled to the middle frame 200 without using screws, thereby reducing assembly costs. The front chassis 100 covering the lower portion among the edges of the panel 10 may be hook-assembled to the middle frame 200 without using screws, thereby shortening assembly time. The front chassis 100 covering the lower portion among the edges of the panel 10 may be hook-assembled to the middle frame 200 without using screws, so that screws are not exposed to the exterior, thereby improving aesthetics.

Each of the plurality of chassis assembly portions 230 may include a first assembly protrusion 231 to which the first hook 131 is assembled, a second assembly protrusion 233 to which the second hook 133 is assembled, and a pair of guide grooves 235 into which the pair of guide protrusions 135 are inserted. According to the present disclosure, the pair of hooks 131 and 133 may be assembled to the middle frame 200 at correct positions.

The front chassis 100 may include a first chassis 110 that forms an exterior and a second chassis 120 that is injection molded and assembled to one surface of the first chassis 110 facing the panel 10. According to the present disclosure, the pair of hooks 131 and 133 and the pair of guide protrusions 135 may be easily formed on the front chassis 100 by injection molding the second chassis 120.

The plurality of frame assembly portions 130 may be formed on the second chassis (120). According to the present disclosure, the pair of hooks 131 and 133 and the pair of guide protrusions 135 may be easily formed on the front chassis 100 by injection molding the second chassis 120.

The middle frame 200 may include a first middle frame 210 to which the plurality of frame assembly portions 130 are assembled and a second middle frame 220 assembled to the first middle frame 210 and to which the diffuser plate 63 is fixed. According to the present disclosure, the plurality of chassis assembly portions 230 may be easily formed on the middle frame 200 by separating the middle frame 200 into the first middle frame 210 and the second middle frame 220.

The second middle frame 220 may be assembled to the rear chassis 20.

The rear chassis 20 may include a first rib 23 to which the second middle frame 220 is assembled, and the second middle frame 220 may include a first assembly groove 221 assembled to the first rib 23.

The second middle frame 220 may further include a second rib 223 to which the first middle frame 210 is assembled.

The first middle frame 210 may include a second assembly groove 211 assembled to the second rib 223.

The first middle frame 210 may include a support rib 213 that supports a front surface of the diffuser plate 63 to prevent the diffuser plate 63 from moving forward. According to the present disclosure, movement of the diffuser plate 63 may be prevented.

A display apparatus according to an embodiment of the present disclosure includes a rear chassis 20, a light source module 50 installed on the rear chassis and emitting light, a middle frame 200 fastened to a front side of the rear chassis, a diffuser plate 63 fixed to the middle frame and disposed on a front side of the light source module to diffuse light emitted from the light source module, a panel 10 disposed on a front side of the diffuser plate, and a front chassis 100 provided to cover edges of the panel and including a plurality of frame assembly portions 130 detachably assembled to the middle frame. Each of the plurality of frame assembly portions includes a pair of hooks 131 and 133 detachably assembled to the middle frame and a pair of guide protrusions 135 that guide assembly positions of the pair of hooks. According to the present disclosure, the structure in which the front chassis 100 covering the edges of the panel 10 is assembled to the middle frame 200 may be improved. The front chassis 100 covering the lower portion among the edges of the panel 10 may be improved to be hook-assembled to the middle frame 200. The front chassis 100 covering the lower portion among the edges of the panel 10 may be hook-assembled to the middle frame 200 without using screws, thereby reducing assembly costs. The front chassis 100 covering the lower portion among the edges of the panel 10 may be hook-assembled to the middle frame 200 without using screws, thereby shortening assembly time. The front chassis 100 covering the lower portion among the edges of the panel 10 may be hook-assembled to the middle frame 200 without using screws, so that screws are not exposed to the exterior, thereby improving aesthetics. The pair of hooks 131 and 133 may be assembled to the middle frame 200 at correct positions.

The pair of hooks 131 and 133 may be formed to protrude in a direction perpendicular to one surface of the front chassis 100. According to the present disclosure, the pair of hooks 131 and 133 may be assembled in the vertical direction of the middle frame 200, thereby facilitating assembly.

The pair of hooks 131 and 133 may be assembled in the vertical direction of the middle frame. According to the present disclosure, the pair of hooks 131 and 133 may be assembled in the vertical direction of the middle frame 200, thereby facilitating assembly.

The middle frame 200 may include a plurality of chassis assembly portions 230 to which the plurality of frame assembly portions 130 are assembled. According to the present disclosure, the structure in which the front chassis 100 covering the edges of the panel 10 is assembled to the middle frame 200 may be improved. The front chassis 100 covering the lower portion among the edges of the panel 10 may be improved to be hook-assembled to the middle frame 200. The front chassis 100 covering the lower portion among the edges of the panel 10 may be hook-assembled to the middle frame 200 without using screws, thereby reducing assembly costs. The front chassis 100 covering the lower portion among the edges of the panel 10 may be hook-assembled to the middle frame 200 without using screws, thereby shortening assembly time. The front chassis 100 covering the lower portion among the edges of the panel 10 may be hook-assembled to the middle frame 200 without using screws, so that screws are not exposed to the exterior, thereby improving aesthetics.

Each of the plurality of chassis assembly portions 230 may include a first assembly protrusion 231 to which the first hook 131 is assembled, a second assembly protrusion 233 to which the second hook 133 is assembled, and a pair of guide grooves 235 into which the pair of guide protrusions 135 are inserted. According to the present disclosure, the pair of hooks 131 and 133 may be assembled to the middle frame 200 at correct positions.

The effects obtainable from the present disclosure are not limited to the effects mentioned above, and other effects not mentioned may be clearly understood by those skilled in the art to which the present disclosure belongs from the following description.

Although the display apparatus has been described above with reference to the accompanying drawings, focusing on specific shapes and directions, various modifications and changes are possible by those skilled in the art, and such modifications and changes should be interpreted as being included in the scope of rights of the present disclosure.

## Claims

1. A display apparatus comprising:
a rear chassis;
a light source module installed on the rear chassis and configured to emit light;
a middle frame fastened to a front side of the rear chassis;
a diffuser plate fixed to the middle frame and disposed on a front side of the light source module to diffuse light emitted from the light source module;
a panel disposed on a front side of the diffuser plate; and
a front chassis configured to cover an edge of the panel,
wherein the front chassis comprises a plurality of frame assembly portions formed on one surface of the front chassis to be detachably assembled to the middle frame, and the plurality of frame assembly portions are assembled in a direction perpendicular to the middle frame.

2. The display apparatus of claim 1, wherein each of the plurality of frame assembly portions comprises:
a pair of hooks detachably assembled to the middle frame; and
a pair of guide protrusions configured to guide assembly positions of the pair of hooks.

3. The display apparatus of claim 2, wherein the pair of hooks is formed to protrude from the one surface of the front chassis in a direction in which the front chassis is assembled to the middle frame.

4. The display apparatus of claim 2, wherein the pair of guide protrusions are respectively formed on left and right sides of the pair of hooks.

5. The display apparatus of claim 2, wherein the pair of hooks comprises:
a first hook formed at one end of the front chassis; and
a second hook formed at the other end of the front chassis and positioned at a location different from the first hook in a longitudinal direction of the front chassis.

6. The display apparatus of claim 5, wherein the middle frame comprises a plurality of chassis assembly portions to which the plurality of frame assembly portions are assembled.

7. The display apparatus of claim 6, wherein each of the plurality of chassis assembly portions comprises:
a first assembly protrusion to which the first hook is assembled;
a second assembly protrusion to which the second hook is assembled; and
a pair of guide grooves into which the pair of guide protrusions are inserted.

8. The display apparatus of claim 1, wherein the front chassis comprises:
a first chassis forming an exterior; and
a second chassis formed by injection molded and assembled to one surface of the first chassis facing the panel.

9. The display apparatus of claim 8, wherein the plurality of frame assembly portions are formed on the second chassis.

10. The display apparatus of claim 1, wherein the middle frame includes:
a first middle frame to which the plurality of frame assembly portions are assembled; and
a second middle frame assembled to the first middle frame and to which the diffuser plate is fixed.

11. The display apparatus of claim 10, wherein the second middle frame is assembled to the rear chassis.

12. The display apparatus of claim 11, wherein the rear chassis comprises a first rib to which the second middle frame is assembled, and the second middle frame comprises a first assembly groove assembled to the first rib.

13. The display apparatus of claim 12, wherein the second middle frame further comprises a second rib to which the first middle frame is assembled.

14. The display apparatus of claim 13, wherein the first middle frame comprises a second assembly groove assembled to the second rib.

15. The display apparatus of claim 10, wherein the first middle frame comprises a support rib configured to support a front surface of the diffuser plate to prevent the diffuser plate from moving forward.
